# EUROPEAN PATENT APPLICATION

(11) **EP 1 826 650 A1**
(43) Date of publication of application: **29.08.2007**
(21) Application number: 06425129.1
(22) Date of filing: 28.02.2006
(51) Int. Cl.: G05D 23/02

(54) **A thermostatic setting device for valves in room heating and conditioning systems**

(71) Applicant: Tiemme Raccorderie S.p.A., 25045 Castegnato (Brescia) (IT)
(72) Inventor: Sigurta, Roberto, 25011 Calcinato (Brescia) (IT)
(74) Representative: Crippa, Paolo Ernesto

(57) **Abstract**

A thermostatic setting device (1) for valves (4) in conditioning systems comprises a support structure (2, 3) connectable to the valve (4), a heat-reactive actuator (9) seated into an actuator seat (8) of the support structure (3), a transmission mechanism (11, 13) for transmitting the actuating movement from the heat-reactive actuator (9) to a control stem (10) of the valve (4) and selecting means (3, 6, 7) suitable for adjusting the position of the actuator seat (8), so as to allow a predetermined positioning of the control stem (10) based on a selectable target temperature value. The selecting means (3, 6, 7), the actuator seat (8), the heat-reactive actuator (9) and the transmission means (11, 13) form an actuating line and a calibrating member (14) is arranged in series in the actuating line so as to allow the calibration thereof.

## Description

The present invention relates to a thermostatic setting device for valves in conditioning systems, in particular for room heating but also cooling.

Heat conditioning systems for rooms, such as home or industrial ones, are typically provided with a heating (such as a boiler) or cooling (such as a conditioner) unit or with a combined thermal unit (such as based on the heat pump principle) which produces a predetermined amount of heat or refrigeration units, yielding them to a transmission fluid (such as water) in a distribution circuit through a heat exchanger. The distribution circuit includes a set of ducts connected to one or more end units (such as radiators) that yield the heat or the refrigeration units carried by the distribution fluid to the room to be conditioned. In order to allow a setting of the heating or cooling power of the end unit (radiator), there is provided a valve for adjusting the flow of the transmission fluid into the pipe that feeds it to the end unit. Such valve is associable to a setting device that allows changing or setting the flow passage section according to the user's requirements.

In the so-called thermostatic setting devices (the so-called "thermostatic heads"), the user's manual operation is limited to the setting of a threshold or target temperature and, when reached, the thermostatic setting device automatically closes the setting valve. Similarly, when the room temperature falls below the threshold value again (in the case of heating) or rises above the threshold value again (in the case of cooling), the thermostatic setting device automatically opens the setting valve.

To this end, the thermostatic setting devices of the prior art comprise a housing connectable to the valve body of the setting valve and a heat-expansible actuator arranged into a seat of the housing and connected by a transmission mechanism, to a valve control stem, so that at a predetermined temperature (threshold temperature or target temperature), the heat expansion of the heat-expansible actuator is just sufficient to close the valve.

The above thermostatic setting devices exhibit the disadvantage that the assembly tolerances of the device itself and the tolerances of connection of the device to the valve (that do not depend on the setting device only but also on the valve itself) directly cause positioning errors of the valve control rod, thus making it impossible to precisely actuate the valve based on a desired threshold temperature.

To at least partly obviate this problem, it is essential to observe strict limits of measurement tolerances of the single components of the setting device as well as carry out the assembly with special attention and accuracy. However, this increases the costs for equipment and production.

The object of the present invention therefore is to propose a thermostatic setting device having such features as to solve the disadvantages mentioned with reference to the prior art.

This and other objects are achieved by a thermostatic setting device for valves in conditioning systems, in particular for heating, comprising:

- a support structure connectable to the valve;

- a heat-reactive actuator housed into an actuator seat of the support structure and that carries out an actuating movement based on the temperature it is exposed to,

- transmission means suitable for transmitting the actuating movement from the heat-reactive actuator to a control stem of the valve for positioning the control stem;

- selecting means suitable for adjusting the position of the actuator seat relative to the valve, so as to allow a predetermined positioning of the valve stem based on a selectable target temperature value,

wherein the selecting means, the actuator seat, the heat-reactive actuator and the transmission means form a valve actuating line,

wherein the device further comprises a calibrating member arranged in series in the actuating line so as to allow the calibration thereof.

This allows a calibration of the actuating line independent of the function of selection of the target temperature and thus, a high setting accuracy. Moreover, the production and the assembly of the device according to the invention can be carried out with less strict tolerances.

According to a further aspect of the invention, the calibrating member is arranged in a position of the device that allows calibration with the actuating line already assembled, and therefore, when the product is at least almost finished, thus eliminating the risk of a subsequent introduction of a calibration error.

According to an even further aspect of the invention, the target temperature value is selectable by rotation of the selecting means about a selection axis and the actuating line can be calibrated by rotation of the calibrating member about a calibration axis coaxial to said selection axis. This allows eliminating any setting or calibration errors due to the various angular positions that the selecting means can take during the calibration operation.

According to an even further aspect of the present invention, the transmission means move in traverse along an actuation axis coaxial to said calibration axis. This makes the thermostatic setting device especially sturdy, allows limiting the dimensions and excludes valve actuation errors due to the fact that the actuation through the heat-reactive actuator occurs in multiple angular positions of the selecting means and of the calibrating member.

Further advantageous features and embodiments are defined in the dependent claims.

To better understand the invention and appreciate its advantages, some exemplary non-limiting embodiments thereof will now be described with reference to the annexed figures, wherein:

figure 1 is a perspective exploded view of the thermostatic setting device according to an embodiment of the invention;

figure 2 is a side view of the device according to the invention in configuration fitted on a setting valve;

figure 3 is a section view according to line III-III of figure 2;

figure 4 is a section view according to line IV-IV of figure 3.

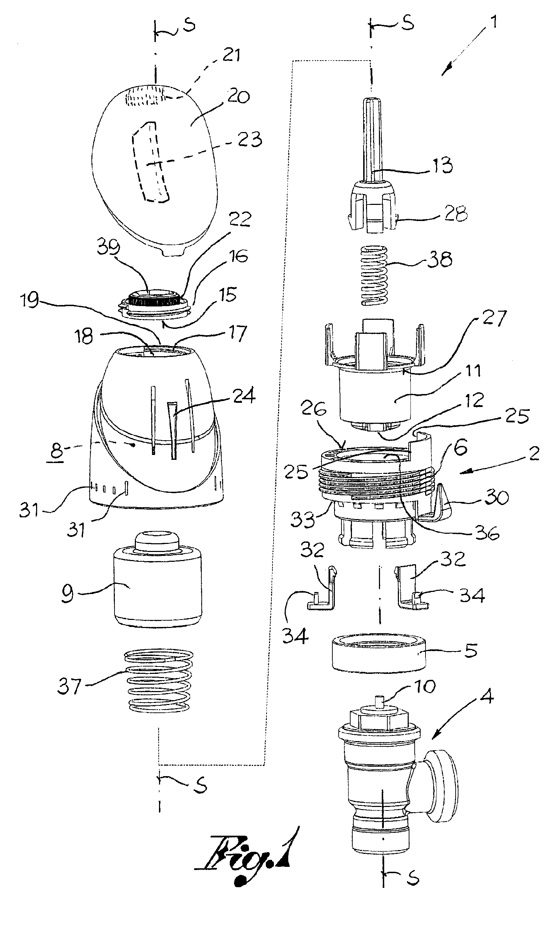

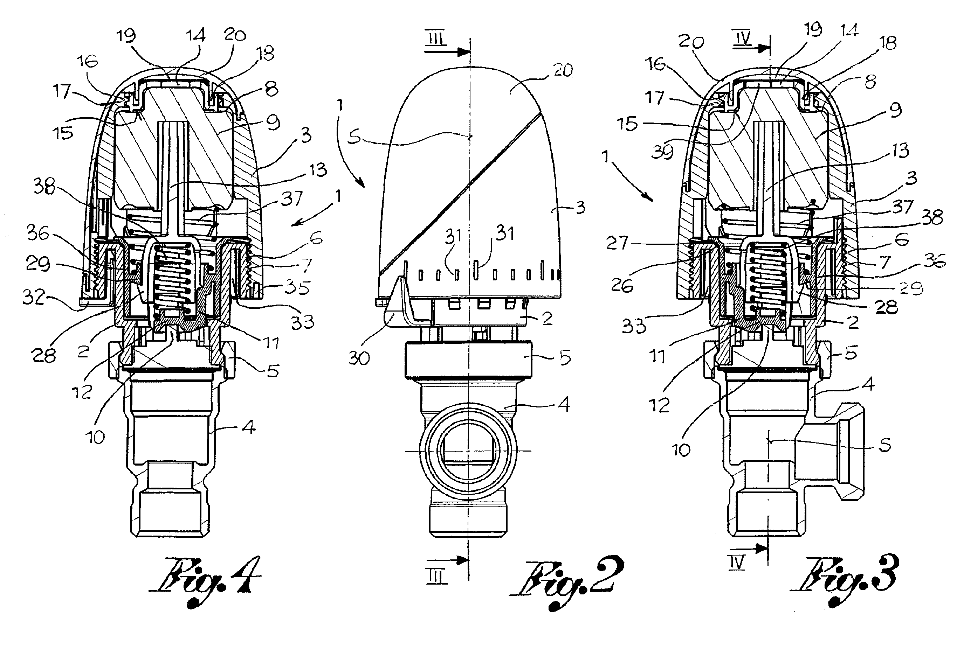

With reference to the figures, a thermostatic setting device is globally indicated with reference numeral 1. Device 1 comprises a support structure with a connecting base 2 and a knob 3. The connecting base 2 is stiffly fixable to valve 4 of a radiator, for example by a ring nut 5, and provided with a first selection thread 6.

Knob 3 comprises a second selection thread 7 screwable into the first selection thread 6 of base 2 for allowing the setting of the reciprocal axial position between knob 3 and base 2. Knob 3 internally delimits an actuator seat 8 for seating a heat-reactive actuator 9. The a heat-reactive actuator 9, for example a heat-expansive actuator containing a wax having a high coefficient of heat expansion, carries out an actuating movement (such as expansion or shrinkage) based on the temperature it is exposed to.

The actuation movement of the heat-reactive actuator 9 is transmitted to a control stem 10 of valve 4 thanks to a transmission mechanism that positions the control stem 10 according to the actuation movement of the heat-reactive actuator 9. The transmission mechanism comprises an outer piston 11 provided with a portion 12 for engaging the control stem 10 of valve 4. Such outer piston 11 is slidingly seated into a piston seat 36 formed into base 2 and cooperates with an inner piston 13 arranged between the outer piston 11 and the heat-reactive actuator 9. A first helical spring 37 acts between the outer piston 11 and the heat-reactive actuator 9 for stressing the latter in permanent abutment against the actuator seat 8 and a second helical spring 38 acts between the outer piston 11 and the inner piston 13 for stressing the inner piston 13 away from the outer piston 11 and in permanent abutment against the heat-reactive actuator 9. In this way, the movement of the heat-reactive actuator 9 is coupled to that of the outer piston 11 only during a final portion of the overall stroke of the heat-reactive actuator 9.

As already mentioned above, by turning knob 3 relative to the connecting base 2, it is possible to adjust the reciprocal axial position between knob 3 and base 2 and thus, the setting of the position of the actuator seat 8 (formed into knob 3) relative to valve 4 (to which base 2 can be fixed), so as to allow a predetermined positioning of the control stem 10 of valve 4 based on a target temperature value selectable by knob 3. The selection threads 6, 7 of the connecting base and of the knob, the actuator seat 8, the heat-reactive actuator 9 and the transmission mechanism 11, 13 therefore form an actuating line of valve 4, whose measurement and coupling accuracy determines the operating accuracy of the thermostatic setting device 1.

In order to improve such accuracy and facilitate all the operations of manufacture, assembly and installation of the device, device 1 advantageously comprises a calibrating member 14 arranged in series in said actuating line, so as to allow the calibration thereof.

Advantageously, the calibrating member 14 is arranged in a position of device 1 that allows the calibration thereof with the actuating line already assembled. In other words, at the end of the assembly of device 1, the calibrating member is accessible from the outside to carry out a calibration of the actuating line which will require no further changes after such end calibration.

According to an embodiment, the target temperature value is selectable by a movement of rotation of knob 3 about a selection axis S and the actuating line can be calibrated by a rotation of the calibrating member 14 about a calibration axis coaxial to the selection axis S. With a further advantage in relation to the accuracy and reliability of device 1, the transmission means 11, 13 move in traverse along an actuation axis coaxial to the calibration axis and therefore, to the selection axis S.

According to an embodiment, the calibrating member 14 is arranged in the actuator seat 8 and forms a support surface 15 for the heat-reactive actuator 9 whose position is adjustable by calibration. Advantageously, the calibrating member 14 exhibits a disc shape with a peripheral thread 16 and a tool seat 39 for receiving a tool for the handling thereof. The calibrating member 14 is screwable into a corresponding thread 17 formed at the actuator seat 8, that is, into knob 3, so that a predetermined angular position of the calibrating member 14 corresponds to a predetermined setting of the position of the support surface 15 and therefore, of the heat-reactive actuator 9.

According to an embodiment, at a side thereof opposite to the selection thread, knob 3 delimits a calibration seat 18 that seats the calibrating member and an access opening 19 that allows access from the outside to at least the tool seat 39 of the calibrating member 14 for allowing the calibration of the actuating line with device 1 assembled, with the exception of a lid 20 that can be later connected to knob 3 for covering such access opening 19.

Advantageously, lid 20 comprises a first coupling portion 21 suitable for engaging a first coupling seat 22 formed in the calibrating member 14 and a second coupling portion 23 suitable for engaging a second coupling seat 24 formed into knob 3, preferably in a zone of the knob covered by lid 20 itself. In this way, with lid fitted, the movements of the calibrating member 14 relative to knob 3 are blocked and access to the calibrating member is prevented.

According to an embodiment, the first coupling portion 21 of lid 20 and/or the first coupling seat 22 of the calibrating member 14 are knurled and preferably, the second coupling portion 23 of the lid comprises a tongue or rib with elongated shape and the second coupling seat 24 of the knob comprises a slit that preferably extends into the direction of the selection axis S and that houses the tongue or rib 23 of lid 20.

Advantageously, the first coupling seat 22 of the calibrating member 14 forms an annular knurling that extends about the tool seat 39.

In order to ensure assembly of device 1 without the risk of accidentally losing the components thereof, knob 3 advantageously exhibits at least one abutment surface suitable for abutting against at least one stop surface 25 formed into the connecting base 2, so as to prevent an accidental extraction of knob 3 from base 2. With particular advantage, with lid 20 fitted on knob 3, the tongue or rib 23 of lid 20 protrudes through slit 24 of knob 3 and a portion thereof protruding from slit 24 forms such abutment surface. Therefore, the lid blocks the calibrating member relative to the knob and (in the direction of a stroke end) the knob relative to the connecting base.

Always in order to prevent the loss of components of the assembled (but not yet fitted on valve 4) device, the connecting base 2 preferably forms an annular surface 26 against which a corresponding annular surface 27 of the outer piston 11 abuts when the latter reaches an end extended position thereof.

According to an embodiment, the inner piston 13 further forms one or more hook portions 28 suitable for engaging, preferably snap-wise, corresponding counter-hooking portions 29 of the outer piston 13, so as to form a stroke end for the removal of the inner piston 13 from the outer piston 11.

According to an embodiment, the inner piston 13 is slidingly guided into the outer piston 11 and advantageously, the above counter-hooking portions 29 of the outer piston 11 form a guide for the inner piston 13.

According to a further embodiment, device 1 comprises a fixed indicator element 30 connected or integral to the connecting base 2, as well as a series of marks 31 (or, alternatively, a continuous mark) representing predetermined target temperature values formed into or applied on knob 3 at the indicator element 30, so as to make the selected target temperature value visible.

A further embodiment of the invention provides for one or more stopping members 32 that can be inserted, by choice, into one or more of a series of seats 33 formed in the connecting base 2. The stopping members 32 comprise a tooth 34 suitable for engaging stopping surfaces 35 formed into knob 3, so as to prevent an adjustment of the knob out of a predetermined selected range.

The device described and illustrated so far allows greater setting accuracy than what can be obtained with the devices of the prior art and further allows easy calibration of the actuating line with assembled device, thus obviating the problem of strict dimensional tolerances and of the adjustment errors due to further assembly steps carried out after calibration. On the one side, this allows the automation of the device assembly and on the other, the use of components that do not require a high dimensional accuracy.

## Claims

1. A thermostatic setting device (1) for valves (4) in conditioning systems, in particular heating systems, comprising:
- a support structure (2,3) connectable to said valve (4);
- a heat-reactive actuator (9) housed into an actuator seat (8) of said support structure (3) and that carries out an actuating movement based on the temperature it is exposed to;
- a transmission mechanism (11,13) suitable for transmitting said actuating movement from the heat-reactive actuator (9) to a control stem (10) of the valve (4) for positioning said control stem (10);
- selecting means (3, 6, 7) suitable for adjusting the position of the actuator seat (8) relative to the valve (4), so as to allow a predetermined positioning of the control stem (10) based on a selectable target temperature value,
wherein the selecting means (3, 6, 7), the actuator seat (8), the heat-reactive actuator (9) and the transmission means (11, 13) form an actuating line,
said device being **characterised in that** it comprises a calibrating member (14) arranged in series in said actuating line, so as to allow the calibration thereof.

2. A device (1) according to claim 1, wherein said calibrating member (14) is arranged in a position of the device (1) that allows the calibration thereof with the actuating line assembled.

3. A device (1) according to any one of the previous claims, wherein
- the target temperature value is selectable by rotation of the selecting means (3) about a selection axis (S),
- the actuating line can be calibrated by rotation of the calibrating member (14) about a calibration axis coaxial to said selection axis (S).

4. A device (1) according to the previous claim, wherein the transmission means (11, 13) move in traverse along an actuation axis coaxial to said selection axis (S).

5. A device (1) according to any one of the previous claims, wherein said calibrating member (14) is arranged in said actuator seat (8) and forms a support surface (15) that can be calibrated for said heat-reactive actuator (9).

6. A device (1) according to claim 5, wherein said calibrating member (14) exhibits a thread (16) screwable into a corresponding thread (17) formed in the actuator seat (8), so that a predetermined angular position of the calibrating member (14) corresponds to a predetermined calibration of the position of the support surface (15) and of the heat-reactive actuator (9).

7. A device (1) according to claim 6, comprising blocking means (20, 21, 22, 23, 24) suitable for blocking the angular position of the calibrating member (14) relative to the actuator seat (8).

8. A device (1) according to any one of the previous claims, wherein said support structure (2, 3) comprises:
- a connecting base (2) stiffly fixable to the valve (4) and provided with a first selection thread (6), a knob (3) provided with a second selection thread (7) screwable into the first selection thread (6) of the base (2) for forming said selecting means (3, 6, 7),
wherein said knob (3) internally delimits said actuator seat (8).

9. A device (1) according to claim 8, wherein said knob (3) delimits a calibration seat (18) suitable for seating said calibrating member (14) and an access opening (19) to said calibrating member from the outside of the knob (3) so as to allow the calibration of the actuating line with device (1) substantially assembled.

10. A device (1) according to claim 9, comprising a lid (20) connectable to said knob (3) so as to cover said access opening (19).

11. A device (1) according to claim 10, wherein said lid (20) comprises:
- a first coupling portion (21) suitable for engaging a first coupling seat (22) formed in the calibrating member (14);
- a second coupling portion (23) suitable for engaging a second coupling seat (24) formed into the knob (3), so that, with lid (20) fitted, the movements of the calibrating member (14) relative to the knob (3) are blocked.

12. A device (1) according to claim 11, wherein said first coupling portion (21) of the lid (20) and/or said first coupling seat (22) of the calibrating member (14) are knurled.

13. A device (1) according to claim 11 or 12, wherein said second coupling portion (23) of the lid (20) comprises a tongue or rib of elongated shape and said second coupling seat (24) of the knob (3) comprises a slit suitable for seating said tongue or rib of the lid.

14. A device (1) according to any one of the previous claims, wherein said knob (3) exhibits at least one abutment surface suitable for abutting against at least one stop surface (25) formed into said connecting base (2), so as to prevent an accidental extraction of the knob (3) from the base (2).

15. A device (1) according to claim 13 and 14, wherein with lid (20) fitted on the knob (3), said tongue or rib (23) of the lid protrudes through said slit (24) of the lid and a portion thereof protruding from said slit forms said abutment surface.

16. A device (1) according to any one of the previous claims, comprising a fixed indicator element (30) connected to said connecting base (2), and one or more marks (31) representing predetermined target temperature values formed into or applied on said knob (3) at the indicator element (30), so as to make the selected target temperature value visible.

17. A device (1) according to any one of the previous claims, comprising one or more stopping members (32) that can be inserted, by choice, into one or more of a series of seats (33) formed into said base (2), wherein said stopping members (32) comprise a tooth (33) suitable for engaging stopping surfaces (35) formed into the knob (3), so as to prevent an adjustment of the knob (3) out of a selected range.

18. A device (1) according to any one of the previous claims, wherein said transmission means (11, 13) comprise:
- an outer piston (11) provided with a portion (12) for engaging the control stem (10) of the valve (4), said outer piston (11) being slidingly seated into a piston seat (36) formed in the base (2);
- an inner piston (13) arranged between the outer piston (11) and the heat-reactive actuator (9),
- first elastic means (37) arranged between said outer piston (11) and the heat-reactive actuator (9) that stress said heat-reactive actuator (9) in permanent abutment against the actuator seat (8, 15),
- second elastic means (38) acting between said outer piston (11) and said inner piston (13) that stress the inner piston (13) away from the outer piston (11) and in permanent abutment against the heat-reactive actuator (9), so as to combine the movement of the heat-reactive actuator (9) with that of the outer piston (11) only during an end portion of the overall stroke of the heat-reactive actuator (9).

19. A device according to claim 18, wherein said connecting base (2) forms an annular surface (26) against which a corresponding annular surface (27) of the outer piston (11) abuts when the latter reaches an end extended position, so as to prevent an accidental loss of components of the device.

20. A device (1) according to claim 18 or 19, wherein said inner piston (13) forms one or more hook portions (28) suitable for engaging corresponding counter-hooking portions (29) of the outer piston (11), so as to form a stroke end for the removal of the inner piston (13) from the outer piston (11).

21. A device (1) according to any one of the previous claims, wherein said calibrating member (14) exhibits a substantially disc shape with a peripheral thread (16) and a seat (39) for receiving a tool and wherein an annular knurling (22) is formed about said seat.

22. A device (1) according to any one of the previous claims, that can be calibrated so that said predetermined positioning of the control stem (10) of the valve (4) makes the valve itself close.
